# DEMANDE DE BREVET EUROPEEN

(11) **EP 0 904 976 A1**
(43) Date de publication de la demande: **31.03.1999**
(21) Numéro de dépôt: 98402214.5
(22) Date de dépôt: 08.09.1998
(51) Int. Cl.: B60N 2/02, B60N 2/06, B60N 2/22, B60N 2/18

(54) **Structure de siège de véhicule automobile**

(30) Priorité: 29.09.1997 FR 9712077
(71) Demandeur: ECIA - EQUIPEMENTS ET COMPOSANTS POUR L'INDUSTRIE AUTOMOBILE, F-25400 Audincourt (FR)
(72) Inventeur: Bak, Philippe Michel, 257000 Valentigney (FR); Laporte, Pierre, 45290 Nogent Sur Vernisson (FR); Reimuth, Serge, 45290 Varennes Changy (FR); Rudi, Alain Michel, 90850 Essert (FR); Le Bihan, Philippe, 45250 Briare (FR); Farine, Eric, 45200 Amilly (FR)
(74) Mandataire: Habasque, Etienne Joel Jean-François

(57) **Abrégé**

Cette structure comportant une assise (1) et un dossier (2) et des moyens motorisés de réglage de la position axiale du siège et de l'inclinaison du dossier par rapport à l'assise, comprenant un organe de motorisation unique (3) adapté pour être accouplé à l'un ou l'autre des moyens de réglage, est caractérisée en ce que l'organe de motorisation (3) est associé à un arbre tubulaire (4), en ce que cet arbre porte au moins deux organes d'engrènement (5,7) adaptés pour coopérer l'un (5), avec des moyens complémentaires des moyens de réglage de la position axiale du siège et l'autre (7), avec des moyens complémentaires (8) des moyens de réglage de l'inclinaison du dossier et en ce que des moyens d'embrayage sont interposés entre l'arbre (4) et chacun des organes d'engrènement et sont déplaçables entre des positions d'embrayage et de débrayage, sous la commande d'un organe de manoeuvre déplaçable dans l'arbre.

## Description

La présente invention concerne une structure de siège de véhicule automobile.

Plus particulièrement, l'invention se rapporte à une telle structure de siège qui comporte au moins une assise et un dossier et des moyens motorisés de réglage au moins de la position axiale du siège dans l'habitacle du véhicule et de l'inclinaison du dossier par rapport à l'assise de celui-ci, comprenant un organe de motorisation unique adapté pour être accouplé sélectivement à l'un ou l'autre des moyens de réglage.

On a développé dans l'état de la technique, plusieurs modes de réalisation de sièges dits à réglages motorisés.

C'est ainsi par exemple que l'on a développé dans l'état de la technique des sièges comportant un organe de motorisation de chaque moyen de réglage du siège.

On conçoit cependant qu'il est alors nécessaire d'implanter plusieurs moteurs dans le siège et que ceci présente un certain nombre d'inconvénients, notamment de coût, de poids, d'encombrement et de complexité d'implantation.

Pour tenter de résoudre ces problèmes, on a alors proposé de n'utiliser qu'un seul organe de motorisation qui est adapté pour être accouplé sélectivement à l'un ou l'autre des moyens de réglage.

On pourra par exemple se reporter aux documents FR-A-2 697 214, FR-A-2 703 309 et FR-A-2 558 781, pour trouver des exemples de réalisation de telles structures de sièges.

Certaines structures de l'état de la technique permettent de commander la totalité des moyens de réglage d'un siège mais sont relativement complexes. D'autres structures sont relativement simples mais sont alors limitées à la commande de deux moyens de réglage uniquement.

Le but de l'invention est donc de résoudre ces problèmes.

A cet effet, l'invention a pour objet une structure de siège de véhicule automobile, du type comportant au moins une assise et un dossier et des moyens motorisés de réglage au moins de la position axiale du siège dans l'habitacle du véhicule et de l'inclinaison du dossier par rapport à l'assise de celui-ci, comprenant un organe de motorisation unique adapté pour être accouplé sélectivement à l'un ou l'autre des moyens de réglage, caractérisée en ce que l'organe de motorisation unique est associé à au moins un arbre tubulaire d'entraînement s'étendant le long de l'assise du siège, en ce que cet arbre porte au moins deux organes d'engrènement adaptés pour coopérer l'un avec des moyens d'engrènement complémentaires des moyens de réglage de la position axiale du siège et l'autre avec des moyens d'engrènement complémentaires des moyens de réglage de l'inclinaison du dossier par rapport à l'assise de celui-ci et en ce que des moyens d'embrayage sont interposés entre l'arbre tubulaire et chacun des organes d'engrènement, ces moyens d'embrayage étant déplaçables entre des positions d'embrayage et de débrayage de l'organe d'engrènement correspondant par rapport à l'arbre tubulaire, sous la commande d'un organe de manoeuvre déplaçable dans l'arbre tubulaire.

Avantageusement, il est prévu des moyens de réglage en hauteur d'au moins une partie de ce siège, et ces moyens de réglage comprennent des moyens d'engrènement complémentaires associés à au moins un autre organe d'engrènement porté par l'arbre tubulaire et des moyens d'embrayage dont le fonctionnement est piloté par l'organe de manoeuvre, sont également interposés entre cet arbre et cet autre organe d'engrènement.

L'invention sera mieux comprise à l'aide de la description qui va suivre, donnée uniquement à titre d'exemple et faite en se référant aux dessins annexés, sur lesquels :
- la Fig.1 représente une vue schématique partielle et de côté d'un exemple de réalisation d'une structure de siège de véhicule automobile selon l'invention;
- la Fig.2 représente une vue en coupe d'un exemple de réalisation d'un arbre tubulaire d'entraînement entrant dans la constitution d'une structure de siège selon l'invention;
- la Fig.3 représente une vue en coupe prise selon la ligne III-III de la figure 2;
- la Fig.4 représente un schéma synoptique illustrant un exemple de réalisation d'un organe de motorisation unique et de moyens de commande d'un organe de manoeuvre entrant dans la constitution d'une structure de siège selon l'invention; et
- la Fig.5 représente une vue de dessus schématique illustrant une variante de réalisation d'une structure de siège selon l'invention.

Ainsi qu'on peut le voir sur ces figures, la structure de siège de véhicule automobile selon l'invention comporte de façon classique, au moins une assise désignée par la référence générale 1 et un dossier désigné par la référence générale 2 et des moyens motorisés de réglage au moins de la position axiale du siège dans l'habitacle du véhicule et de l'inclinaison du dossier par rapport à l'assise de celui-ci.

Pour des raisons de clarté, on ne rentrera pas dans le détail de la description de ces moyens de réglage, car ceux-ci peuvent présenter n'importe quelle structure classique connue dans l'état de la technique.

On notera simplement qu'une telle structure comprend un organe de motorisation unique adapté pour être accouplé sélectivement à l'un ou l'autre des moyens de réglage.

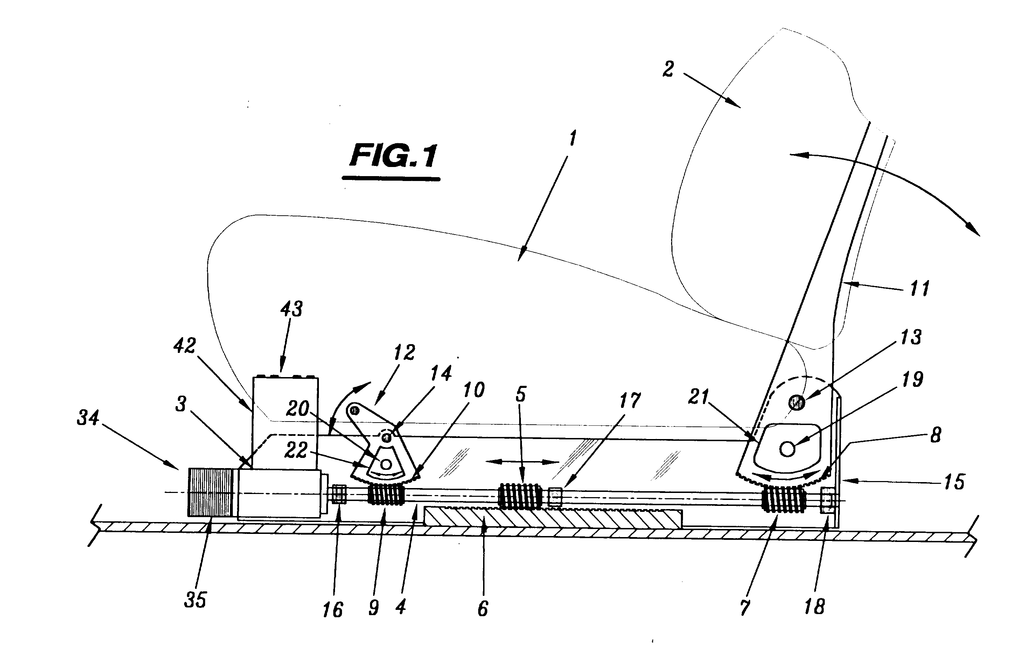

En fait et comme on peut le voir en particulier sur la figure 1, l'organe de motorisation unique est désigné par la référence générale 3 et est associé à au moins un arbre tubulaire d'entraînement désigné par la référence générale 4 sur ces figures, s'étendant le long de l'assise 1 du siège.

C'est ainsi par exemple que cet arbre tubulaire d'entraînement 4 peut être disposé sur l'un des cotés de l'assise du siège.

Cet arbre d'entraînement 4 porte au moins deux organes d'engrènement adaptés pour coopérer l'un avec des moyens d'engrènement complémentaires des moyens de réglage de la position axiale du siège et l'autre, avec des moyens d'engrènement complémentaires des moyens de réglage de l'inclinaison du dossier par rapport à l'assise de celui-ci.

C'est ainsi par exemple que cet arbre 4 porte un premier organe d'engrènement constitué par exemple par une vis sans fin, désignée par la référence générale 5, qui est adaptée pour coopérer par exemple avec une crémaillère 6 du reste de la structure du véhicule, constituant les moyens d'engrènement complémentaires des moyens de réglage de la position axiale du siège dans l'habitacle du véhicule.

Par ailleurs, cet arbre tubulaire d'entraînement 4 porte également une deuxième vis sans fin désignée par la référence générale 7 sur cette figure 1, constituant un autre organe d'engrènement et qui est adaptée pour coopérer avec une portion de couronne dentée 8 constituant les moyens d'engrènement complémentaires des moyens de réglage de l'inclinaison du dossier 2 par rapport à l'assise 1 de celui-ci.

De plus, dans une telle structure de siège selon l'invention, il peut également être prévu des moyens de réglage en hauteur d'au moins une partie de ce siège.

Dans l'exemple décrit en regard de cette figure 1, de tels moyens de réglage en hauteur sont disposés dans la partie avant de l'assise du siège et dans ce cas, l'arbre tubulaire d'entraînement 4 porte une troisième vis sans fin 9 constituant encore un autre organe d'engrènement et adaptée pour coopérer avec une autre portion de couronne dentée 10 constituant des moyens d'engrènement complémentaires de ces moyens de réglage en hauteur de cette partie de l'assise du siège.

Dans l'exemple décrit, la vis sans fin 5 est disposée dans la partie intermédiaire de l'arbre tubulaire d'entraînement 4, tandis que les vis sans fin 7 et 9 sont disposées à proximité des extrémités de celui-ci.

Il va de soi que d'autres dispositions de ces vis peuvent être envisagées.

Les moyens de réglage de l'inclinaison du dossier 2 du siège par rapport à l'assise 1 de celui-ci et de réglage en hauteur de la partie correspondante de cette assise, comprennent par exemple des bras de manoeuvre, respectivement 11 et 12, articulés de façon classique respectivement en 13 et 14, sur une embase de support de la structure de siège désignée par la référence générale 15.

Cette embase 15 porte également l'organe de motorisation unique 3 et son arbre tubulaire d'entraînement 4.

C'est ainsi par exemple que des paliers de montage et de reprise des efforts sont interposés entre cet arbre 4 et cette embase 15, ces paliers étant par exemple au nombre de trois et étant disposés à proximité de chaque extrémité de cet arbre tubulaire et dans la partie intermédiaire de celui-ci, ces paliers étant désignés par les références générales 16,17 et 18.

Par ailleurs, des moyens complémentaires de butée de déplacement peuvent également être associés à ces moyens de réglage. Ces moyens de butée comprennent par exemple des parties en saillie de l'embase 15 désignées par les références générales 19 et 20 respectivement, pour les moyens de réglage de l'inclinaison du dossier et de la hauteur de la portion correspondante de l'assise du siège, déplaçables dans des lumières respectivement 21 et 22 des bras de manoeuvre correspondants 11 et 12, lors des réglages des portions correspondantes du siège.

Ces moyens permettent de limiter les déplacements des portions de siège correspondantes notamment en cas de choc pour éviter tout risque de déformation excessive du siège.

Comme on l'a indiqué précédemment, l'organe de motorisation unique 3 est adapté pour être accouplé sélectivement à l'un ou l'autre des moyens de réglage.

A cet effet, des moyens d'embrayage sont interposés entre l'arbre tubulaire et chacun des organes d'engrènement portés par celui-ci, ces moyens d'embrayage étant déplaçables entre des positions d'embrayage et de débrayage de chaque organe d'engrènement correspondant par rapport à l'arbre tubulaire, sous la commande d'un organe de manoeuvre déplaçable dans l'arbre tubulaire.

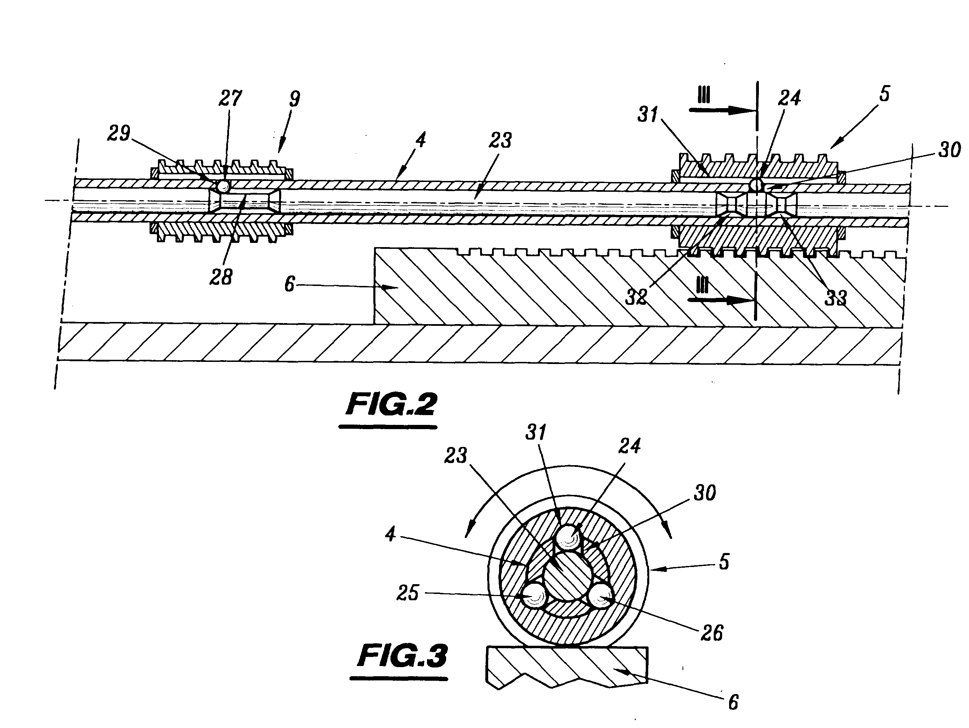

Ceci est illustré sur les figures 2 et 3, dans lesquelles on reconnaît la vis sans fin 5 associée à la crémaillère 6 et la vis sans fin 9 associée à la portion de couronne dentée des moyens de réglage en hauteur de la portion correspondante de l'assise du siège.

Un organe de manoeuvre des moyens d'embrayage, désigné par la référence générale 23 sur ces figures et se présentant par exemple sous la forme d'une tige montée déplaçable à coulissement dans cet arbre tubulaire pour commander les moyens d'embrayage, permet alors de déplacer les moyens d'embrayage correspondants entre une position escamotée telle qu'illustrée pour la vis sans fin 9, et une position embrayée telle qu'illustrée pour la vis sans fin 5.

En fait et comme on peut le voir sur ces figures, les moyens d'embrayage comprennent par exemple pour chaque organe d'engrènement au moins une butée radiale déplaçable à travers un évidement correspondant de l'arbre tubulaire par l'organe de manoeuvre, entre une position escamotée, dans laquelle cette butée radiale s'étend dans un décrochement correspondant de cet organe de manoeuvre à l'intérieur de l'arbre, l'organe d'engrènement étant alors débrayé par rapport à l'arbre, et une position active, dans laquelle cette butée radiale s'étend dans l'évidement correspondant de l'arbre tubulaire et dans un évidement correspondant de l'organe d'engrènement, cet organe étant alors lié en rotation à l'arbre par cette butée.

Dans l'exemple de réalisation représenté sur ces figures 2 et 3, les moyens d'embrayage comprennent pour chaque organe d'engrènement trois butées radiales disposées à 120° les unes par rapport aux autres et désignées par les références générales 24, 25 et 26 sur la figure 3 pour la vis sans fin 5 des moyens de réglage en position axiale du siège.

Sur la figure 2, on voit alors apparaître la butée radiale 24 des moyens d'embrayage interposés entre la vis sans fin 5 et l'arbre tubulaire 4, tandis que la butée correspondante des moyens d'embrayage interposés entre la vis sans fin 9 et cet arbre tubulaire 4, est désignée par la référence générale 27.

En fait, chaque butée radiale peut comporter une bille comme cela est illustré.

On conçoit alors qu'en position débrayée des moyens d'embrayage comme cela est illustré pour la vis sans fin 9, la bille 27 correspondante est en position escamotée, dans laquelle celle-ci s'étend dans un décrochement correspondant 28 de l'organe de manoeuvre 23 à l'intérieur de l'arbre 4, cette bille étant maintenue en position dans un évidement correspondant 29 de cet arbre, de sorte que l'organe d'engrènement, c'est-à-dire la vis sans fin 9, est alors débrayée par rapport à l'arbre.

Par contre, et comme on peut le voir pour la vis sans fin 5, ces billes peuvent être déplacées de cette position escamotée vers une position active par l'organe de manoeuvre 23, dans laquelle chaque bille des moyens d'embrayage comme par exemple la bille 24, s'étend alors dans l'évidement correspondant de l'arbre tubulaire par exemple 30, et dans un évidement correspondant par exemple 31, de l'organe d'engrènement, c'est-à-dire de la vis sans fin 5, pour lier en rotation l'organe d'engrènement, c'est-à-dire la vis sans fin 5, et l'arbre tubulaire d'entraînement 4.

Comme cela est illustré sur ces figures, l'organe de manoeuvre 23 présente alors en regard de cette vis sans fin 5, deux décrochements, respectivement 32 et 33, permettant lors des déplacements dans une direction ou dans une autre de cet organe de manoeuvre, de déplacer les moyens d'embrayage vers leur position débrayée.

On notera que les décrochements de l'organe de manoeuvre 23, c'est-à-dire les décrochements 28,32 et 33 représentés pour les vis sans fin 9 et 5, de même que les évidements correspondants par exemple 31 des organes d'engrènement, présentent des bords en rampe facilitant le déplacement des billes de leur position embrayée vers leur position débrayée et inversement.

De même, l'organe de manoeuvre 23 et la ou chaque butée radiale des moyens d'embrayage peuvent présenter l'un, une caractéristique d'aimantation rémanente et l'autre, une caractéristique ferromagnétique, amenant par exemple les billes à rester au contact de l'organe de manoeuvre pour faciliter le déplacement de celles-ci.

On conçoit alors qu'en fonction de la position par exemple axiale de l'organe de manoeuvre 23 dans l'arbre tubulaire d'entraînement 4, les moyens d'embrayage associés à l'un des organes d'engrènement sont en position embrayée, tandis que les moyens d'embrayage associés aux autres organes d'engrènement sont en position débrayée, pour permettre le réglage correspondant par l'utilisateur.

Les autres réglages sont alors activés par l'utilisateur en déplaçant l'organe de manoeuvre dans l'arbre tubulaire.

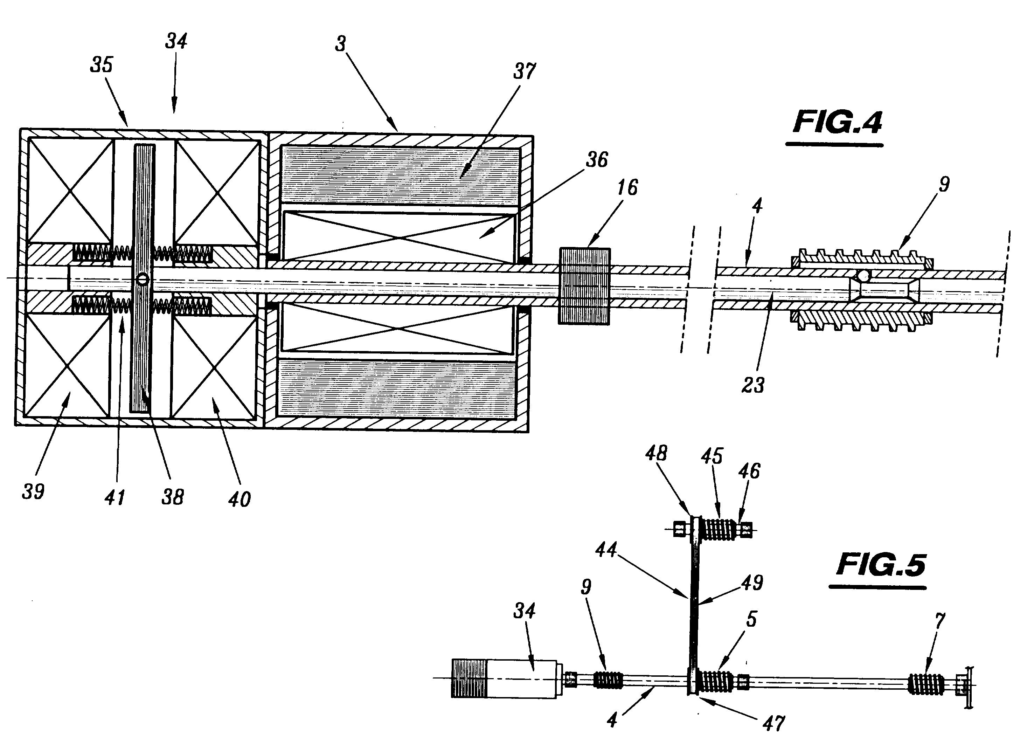

A cet effet, et comme On peut le voir sur les figures 1 et 4, l'arbre d'entraînement 4 peut porter à proximité de l'une de ses extrémités, un module de commande désigné par la référence générale 34, ce module de commande 34 comportant l'organe de motorisation unique 3 qui peut par exemple se présenter sous la forme d'un moteur électrique, des moyens de commande du fonctionnement de celui-ci, des moyens de déplacement de l'organe de manoeuvre 23 des moyens d'embrayage dans l'arbre tubulaire, désignés par la référence générale 35 et qui peuvent par exemple se présenter sous la forme d'un vérin électrique et des moyens de commande de ceux-ci.

C'est ainsi par exemple comme on peut le voir sur la figure 4, que l'arbre tubulaire d'entraînement 4 peut être relié au rotor 36 du moteur 3, celui-ci étant par exemple un moteur à aimants permanents, désignés de façon générale par la référence 37.

L'organe de manoeuvre 23 comporte quant à lui à une extrémité, qui s'étend au-delà du moteur en traversant le rotor de celui-ci, une pièce formant piston de déplacement désignée par la référence générale 38 sur la figure 4, disposée entre deux bobines d'électroaimant, respectivement 39 et 40, et reliée au reste de cet organe.

Des moyens élastiques tels que des ressorts, désignés par la référence générale 41 sur cette figure, sont adaptés pour placer au repos, la pièce formant piston 38 dans une position intermédiaire entre les deux bobines d'électroaimant et amener ainsi les moyens d'embrayage interposés entre la vis sans fin 5 et l'arbre tubulaire 4 en position embrayée et les moyens d'embrayage interposés entre les autres vis sans fin et l'arbre tubulaire en position débrayée, comme cela est illustré sur les figures 2 et 3, en plaçant l'organe de manoeuvre en position intermédiaire dans l'arbre.

Les moyens de commande du moteur électrique présentent une structure classique et permettent d'alimenter celui-ci dans un sens ou dans l'autre pour faire tourner le moteur dans un sens ou dans l'autre, afin de permettre les réglages souhaités.

On notera également que cette alimentation du moteur peut être une alimentation progressive permettant d'obtenir une vitesse de rotation progressive dans le temps de celui-ci pour permettre par exemple un réglage fin de la position de la portion correspondante du siège.

Les moyens de commande des moyens de déplacement de l'organe de manoeuvre, comportent quant à eux également des moyens d'alimentation de l'une ou l'autre des bobines 39 et 40, pour amener celui-ci à se déplacer à coulissement dans une direction ou dans l'autre à l'intérieur de l'arbre tubulaire d'entraînement 4.

Lorsque la bobine 40 est alimentée, la pièce formant piston 38 vient alors se plaquer contre celle-ci, ce qui permet de déplacer l'organe de manoeuvre et les moyens d'embrayage interposés entre la vis sans fin 5, la vis sans fin 7 et l'arbre tubulaire 4 vers une position débrayée, et les moyens d'embrayage interposés entre l'arbre tubulaire 4 et la vis sans fin 9, vers une position embrayée.

Lorsqu'on alimente la bobine 39, les moyens d'embrayage interposés entre la vis sans fin 5, la vis sans fin 9 et l'arbre tubulaire 4 sont déplacés vers leur position débrayée, tandis que les moyens d'embrayage interposés entre la vis sans fin 7 et l'arbre tubulaire d'entraînement 4 sont déplacés vers leur position embrayée, ceux-ci présentant une structure symétrique à celle des moyens interposés entre la vis sans fin 9 et l'arbre d'entraînement 4, dans l'exemple décrit.

On conçoit alors qu'en fonction de l'état d'alimentation des bobines de ce vérin, on peut activer les moyens de réglage du siège sélectivement, c'est-à-dire indépendamment les uns des autres.

Si l'on se réfère maintenant à nouveau à la figure 1, on peut constater que ce moteur électrique et ce vérin électrique peuvent être disposés dans un seul et même module désigné par la référence générale 34 sur cette figure, ce module étant muni par exemple d'une partie en saillie en forme de poignée, désignée par la référence générale 42 sur cette figure 1, sur la partie supérieure de laquelle sont prévus par exemple des boutons de commande 43 permettant à l'utilisateur de piloter les différentes fonctions décrites précédemment.

Les circuits de pilotage du moteur et du vérin peuvent être logés dans cette partie en saillie de ce module.

Il va de soi bien entendu que d'autres modes de réalisation de ces différents moyens peuvent être envisagés.

C'est ainsi par exemple que les moyens de déplacement de l'organe de manoeuvre dans l'arbre tubulaire peuvent également comporter une poignée manipulable par un utilisateur.

Cette poignée est alors formée par exemple par une portion du module de commande, telle que par exemple la partie en saillie 42 de celui-ci.

Cette poignée remplace alors le vérin électrique et les déplacements de l'organe de manoeuvre 23 dans l'arbre tubulaire d'entraînement 4 sont contrôlés manuellement par l'utilisateur en déplaçant cette poignée entre différentes positions par exemple permettant de déplacer les moyens d'embrayage interposés entre les organes d'engrènement correspondants et l'arbre tubulaire entre leurs positions embrayée et débrayée de façon sélective.

Il va de soi bien entendu que d'autres modes de réalisation encore peuvent être envisagés.

On a indiqué précédemment que l'arbre d'entraînement tubulaire 4 est disposé sur l'un des côtés de l'assise du siège.

Dans la variante de réalisation représentée sur la figure 5, l'organe d'engrènement c'est-à-dire la vis sans fin 5 associée aux moyens de réglage de la position axiale du siège, peut être reliée par des moyens d'accouplement désignés par la référence générale 44 à un autre organe d'engrènement désigné par la référence générale 45, disposé de l'autre côté de l'assise du siège et adapté pour coopérer avec des moyens d'engrènement complémentaires de moyens de réglage en position axiale du siège disposés sur cet autre côté de l'assise.

Dans ce cas, ces moyens d'engrènement 45 comprennent également par exemple une vis sans fin montée à rotation sur un arbre porteur 46 et adaptée pour coopérer avec une autre crémaillère disposée sur cet autre côté de l'assise du siège pour éviter tout problème de déformation de ce siège.

Les moyens d'accouplement désignés par la référence générale 44 peuvent alors comporter des poulies associées aux organes d'engrènement, ces poulies étant désignées par les références générales 47 et 48 sur cette figure 5 et sur lesquelles passe une courroie 49, cette courroie étant par exemple crantée.

On notera également que dans ce cas, les poulies 47 et 48 peuvent être venues de matière avec les organes d'engrènement correspondants, c'est-à-dire avec les vis sans fin 5 et 45.

On conçoit alors que lorsque les moyens d'embrayage interposés entre la vis sans fin 5 et l'arbre tubulaire d'entraînement 4 sont en position embrayée, la rotation de cette vis sans fin 5 est transmise à la vis sans fin 45 disposée de l'autre côté de l'assise, par l'intermédiaire de ces poulies 47 et 48 et de cette courroie crantée 49.

Il va de soi bien entendu que d'autres modes de réalisation de ces moyens peuvent être envisagés.

On conçoit alors que la structure de siège selon l'invention présente un certain nombre d'avantages par rapport à celles de l'état de la technique, dans la mesure où elle n'utilise qu'un seul organe de motorisation associé à un arbre tubulaire d'entraînement portant l'ensemble des organes d'engrènement associés aux différents moyens de réglage en position du siège. Les différents réglages en position du siège peuvent alors être obtenus en accouplant sélectivement l'un de ces organes d'engrènement à l'arbre tubulaire d'entraînement par la commande de moyens d'embrayage interposés entre ces organes d'engrènement et l'arbre tubulaire d'entraînement.

Cette commande est obtenue par déplacement d'un organe de manoeuvre disposé dans l'arbre tubulaire et plus particulièrement dans l'exemple décrit par un déplacement à coulissement de celui-ci dans cet arbre, ce qui permet de déplacer des butées, telles que par exemple des billes, entre des positions escamotée de débrayage de l'organe d'engrènement par rapport à l'arbre et active d'embrayage, pour permettre le réglage.

Cette structure est alors extrêmement simple, fiable et d'un coût limité, ce qui permet d'envisager l'extension de l'intégration de tels sièges à réglages dits motorisés dans la plupart des véhicules.

## Revendications

1. Structure de siège de véhicule automobile, du type comportant au moins une assise (1) et un dossier (2) et des moyens motorisés de réglage au moins de la position axiale du siège dans l'habitacle du véhicule et de l'inclinaison du dossier par rapport à l'assise de celui-ci, comprenant un organe de motorisation unique (3) adapté pour être accouplé sélectivement à l'un ou l'autre des moyens de réglage, caractérisée en ce que l'organe de motorisation unique (3) est associé à au moins un arbre tubulaire d'entraînement (4) s'étendant le long de l'assise du siège, en ce que cet arbre porte au moins deux organes d'engrènement (5,7) adaptés pour coopérer l'un (5) avec des moyens d'engrènement complémentaires (6) des moyens de réglage de la position axiale du siège et l'autre (7) avec des moyens d'engrènement complémentaires (8) des moyens de réglage de l'inclinaison du dossier par rapport à l'assise de celui-ci et en ce que des moyens d'embrayage (24,25,26) sont interposés entre l'arbre tubulaire (4) et chacun des organes d'engrènement, ces moyens d'embrayage étant déplaçables entre des positions d'embrayage et de débrayage de l'organe d'engrènement correspondant par rapport à l'arbre tubulaire, sous la commande d'un organe de manoeuvre (23) déplaçable dans l'arbre tubulaire (4).

2. Structure selon la revendication 1, dans laquelle il est prévu des moyens (12) de réglage en hauteur d'au moins une partie de ce siège, caractérisée en ce que ces moyens de réglage comprennent des moyens d'engrènement complémentaires (10) associés à au moins un autre organe d'engrènement (9) porté par l'arbre tubulaire (4) et en ce que des moyens d'embrayage (27) dont le fonctionnement est piloté par l'organe de manoeuvre (23), sont également interposés entre cet arbre et cet autre organe d'engrènement.

3. Structure selon la revendication 1 ou 2, caractérisée en ce que l'organe de manoeuvre (23) est déplaçable à coulissement dans l'arbre tubulaire d'entraînement (4), pour commander les moyens d'embrayage.

4. Structure selon l'une quelconque des revendications précédentes, caractérisée en ce que l'arbre tubulaire d'entraînement (4) est disposé sur l'un des côtés de l'assise du siège.

5. Structure selon l'une quelconque des revendications précédentes, caractérisée en ce que l'arbre d'entraînement (4) porte à proximité de l'une de ses extrémités un module de commande (34) comportant l'organe de motorisation (3), des moyens (43) de commande du fonctionnement de celui-ci, des moyens de déplacement (35) de l'organe de manoeuvre (23) des moyens d'embrayage dans l'arbre tubulaire et des moyens (43) de commande de ceux-ci.

6. Structure selon la revendication 5, caractérisée en ce que l'organe de motorisation comporte un moteur électrique (3).

7. Structure selon la revendication 5 ou 6, caractérisée en ce que les moyens de déplacement de l'organe de manoeuvre comprennent un vérin électrique (35).

8. Structure selon la revendication 5 ou 6, caractérisée en ce que les moyens de déplacement de l'organe de manoeuvre (23) comprennent une poignée (42) manipulable par un utilisateur.

9. Structure selon la revendication 8, caractérisée en ce que la poignée est formée par une partie (42) du module de commande (34).

10. Structure selon l'une quelconque des revendications précédentes, caractérisée en ce que les moyens d'embrayage comprennent pour chaque organe d'engrènement, au moins une butée radiale (24,25,26) déplaçable à travers un évidement correspondant (30) de l'arbre tubulaire (4) par l'organe de manoeuvre (23), entre une position escamotée, dans laquelle cette butée radiale s'étend dans un décrochement correspondant (32,33) de cet organe (23) à l'intérieur de l'arbre (4), l'organe d'engrènement (5) étant alors débrayé par rapport à l'arbre (4) et une position active, dans laquelle cette butée radiale (24, 25,26) s'étend dans l'évidement correspondant (30) de l'arbre tubulaire (4) et dans un évidement correspondant (31) de l'organe d'engrènement (5), cet organe étant alors lié en rotation à l'arbre par cette butée.

11. Structure selon la revendication 10, caractérisé en ce que les moyens d'embrayage comprennent pour chaque organe d'engrènement, trois butées radiales (24, 25,26) disposées à 120° les unes des autres.

12. Structure selon la revendication 10 ou 11 caractérisée en ce que la ou chaque butée comporte une bille.

13. Structure selon la revendication 10,11 ou 12, caractérisée en ce que le décrochement (32,33) de l'organe de manoeuvre (23) et l'évidement (31) de l'organe d'engrènement (5) présentent des bords en rampe.

14. Structure selon l'une quelconque des revendications précédentes, caractérisée en ce que les moyens d'engrènement (5,7,9) comprennent des vis sans fin et les moyens d'engrènement complémentaires des moyens de réglage de la position axiale du siège dans l'habitacle du véhicule comprennent une crémaillère (6), tandis que les moyens d'engrènement complémentaires des autres moyens de réglage, comprennent au moins une portion de couronne dentée (8,10).

15. Structure selon l'une quelconque des revendications précédentes, caractérisée en ce que l'organe de manoeuvre (23) et la ou chaque butée radiale (24, 25,26) des moyens d'embrayage présentent l'un, une caractéristique d'aimantation rémanente et l'autre, une caractéristique ferromagnétique.

16. Structure selon l'une quelconque des revendications précédentes, caractérisée en ce que l'organe de manoeuvre (23) se présente sous la forme d'une tige déplaçable dans l'arbre tubulaire (4).

17. Structure selon l'une quelconque des revendications précédentes, caractérisée en ce que l'arbre d'entraînement (4) est disposé sur l'un des côtés de l'assise du siège et en ce que l'organe d'engrènement (5) associé aux moyens de réglage de la position axiale du siège est relié par des moyens d'accouplement (44) à un autre organe d'engrènement (45) disposé de l'autre côté de l'assise du siège et adapté pour coopérer avec des moyens d'engrènement complémentaires de moyens de réglage en position axiale du siège disposés sur cet autre côté de l'assise.

18. Structure selon la revendication 17, caractérisée en ce que les moyens d'accouplement comportent des poulies (47,48) associées aux organes d'engrènement (5,45) et sur lesquelles passe une courroie (49).

19. Structure selon la revendication 18, caractérisée en ce que la courroie (49) est crantée.

20. Structure selon la revendication 18 ou 19, caractérisée en ce que chaque poulie (47,48) est venue de matière avec l'organe d'engrènement correspondant (5,45).

21. Structure selon l'une quelconque des revendications précédentes, caractérisée en ce que les moyens de réglage comporte des moyens complémentaires de butée de déplacement (19,21,20,22).

22. Structure selon l'une quelconque des revendications précédentes, caractérisée en ce que l'arbre tubulaire (4) et les moyens d'engrènement correspondants sont reliés à l'assise du siège par des moyens de guidage et de reprise d'efforts (16,17,18).
